Europäisches Patentamt

European Patent Office

Office européen des brevets

(11) Publication number: **0 196 929**

**B1**

(12) **EUROPEAN PATENT SPECIFICATION**

(45) Date of publication of patent specification: **27.12.90**

(21) Application number: **86302532.6**

(22) Date of filing: **04.04.86**

(51) Int. Cl.⁵: **G 06 F 3/023**

(54) Electronic apparatus.

(30) Priority: **04.04.85 JP 51242/85**

(43) Date of publication of application:
**08.10.86 Bulletin 86/41**

(45) Publication of the grant of the patent:
**27.12.90 Bulletin 90/52**

(84) Designated Contracting States:
**DE FR GB**

(56) References cited:
**DE-A-3 336 834**

**PATENTS ABSTRACTS OF JAPAN, vol. 8, no.
248 (P-313)1685r, 14th November 1984; & JP - A
- 59 121 428 (SHARP K.K.) 13-07-1984**

(73) Proprietor: **SHARP KABUSHIKI KAISHA
22-22 Nagaike-cho Abeno-ku
Osaka 545 (JP)**

(72) Inventor: **Honda, Toshio
3-1-8, Kamei-cho
Yao-shi Osaka-fu (JP)**
Inventor: **Kataoka, Yoshiro
2-4-1, Mokuzaidanchi Abe
Sakurai-shi Nara-ken (JP)**
Inventor: **Konishi, Masayuki
492, Minosho-cho
Yamatokoriyama-shi Nara-ken (JP)**

(74) Representative: **Brown, Kenneth Richard et al
R.G.C. Jenkins & Co. 26 Caxton Street
London SW1H 0RJ (GB)**

Courier Press, Leamington Spa, England.

## Description

The present invention relates to an electronic apparatus comprised of a main unit and a memory card that can be readily installed and removed for replacement by other memory cards.

More particularly, the electronic apparatus significantly improves data processing by use of memory cards that store a variety of information, including, for example, telephone numbers and addresses.

Existing electronic apparatus provided with a conventional data processing function is designed to deal with either one or several kinds of information, thus causing inconvenience. The first type obliges the operator to keep a number of electronic apparatuses sufficient for the kinds of data needed, thus inhibiting portability. The second type involves complex key operations and many are provided with a variety of unnecessary functions.

Our published Japanese patent application No. 59121428 discloses an electronic apparatus with a data display and a keyboard, a key template being provided for fitting over the keys to indicate the key functions. This template has key holes corresponding to the keys of the apparatus, and a memory storing the program for the required key functions.

However, this known arrangement is somewhat inconvenient and cannot ensure reliable attachment of the template, since this element merely fits over the keys.

The present invention seeks to improve on this known arrangement. The invention provides an electronic apparatus allowing data input operation to be executed by using key symbols, comprising;

a main unit which includes a controller unit a data output unit, and an array of key elements;

and card means, which can be readily inserted into said main unit and removed therefrom for replacement, said card means having a memory and key symbols in positions corresponding to the positions of said key elements for indicating the functions of said key elements characterised in that said key elements each comprise transparent key electrode means and in the main unit is adapted to accommodate the inserted card means in a position beneath said array of key elements with said key symbols visible through said transparent key electrode means.

The invention also provides an electronic apparatus wherein said data output unit is a data display unit. Thus the card means can be attached firmly and reliably in the main unit.

The present invention will be better understood from the detailed description given below and the accompanying drawings which are given by way of illustration only, and thus do not limit the present invention in which:

Fig. 1, Figs. 2 (a), (b) and (c), and Figs. 3 (a), (b) and (c), are schematic views of the components of the electronic apparatus reflecting one of the preferred embodiments of the present invention;

Fig. 4 is a perspective view of the main unit of the electronic apparatus embodying the present invention.

Figs. 5 (a) and (b) show the construction of the card used with the electronic apparatus embodying the present invention;

Fig. 6 is a simplified schematic block diagram of the electronic circuit formed when the main unit and card are combined;

Fig. 7 is a plan view of the electronic apparatus.

Figs. 8 and 9 are sectional views of the electronic apparatus; and

Fig. 10 is an enlarged partial sectional view of the electronic apparatus embodying the present invention.

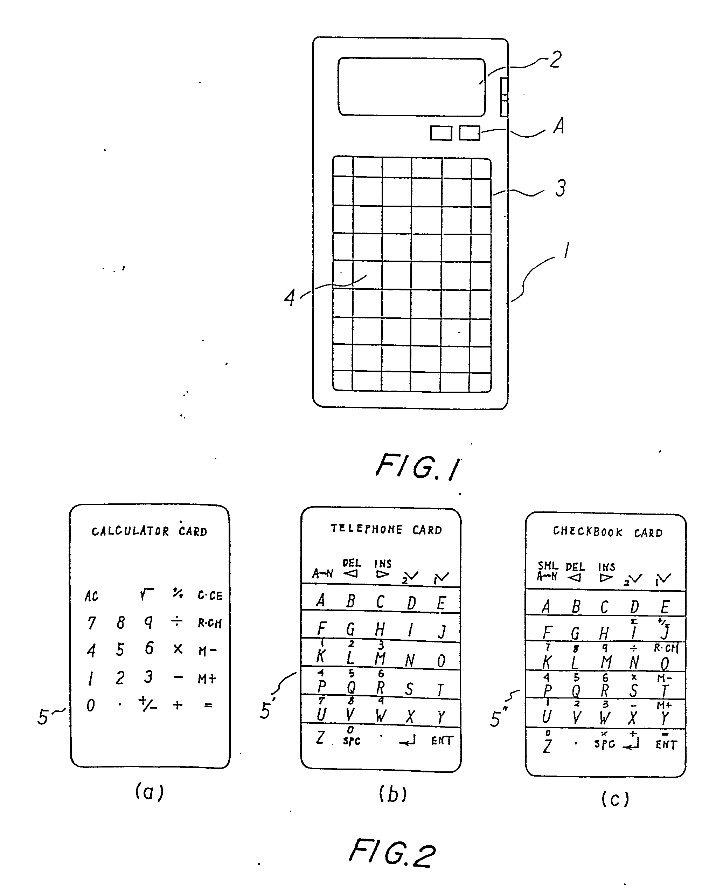

Fig. 1 through Fig. 3 show the construction of the electronic apparatus reflecting one of the preferred embodiments of the present invention. Fig. 1 is a plan view of the electronic apparatus, in which reference numeral 1 denotes a housing of the main unit which is provided with a display unit (output unit) 2. A rectangular cut-out portion 3 is provided on the surface on which the display unit 2 is located. The cut-out portion 3 contains a surface 4 in which transparent key electrodes are provided. The reference character A shows a power key. When an IC card is inserted into the main unit housing 1, key symbols printed on the IC card are visible on the key electrode surface 4. Although not shown in Fig. 1, the main unit housing 1 also contains the terminals that allow communication with the microcomputer (CPU) and the circuits needed for communication.

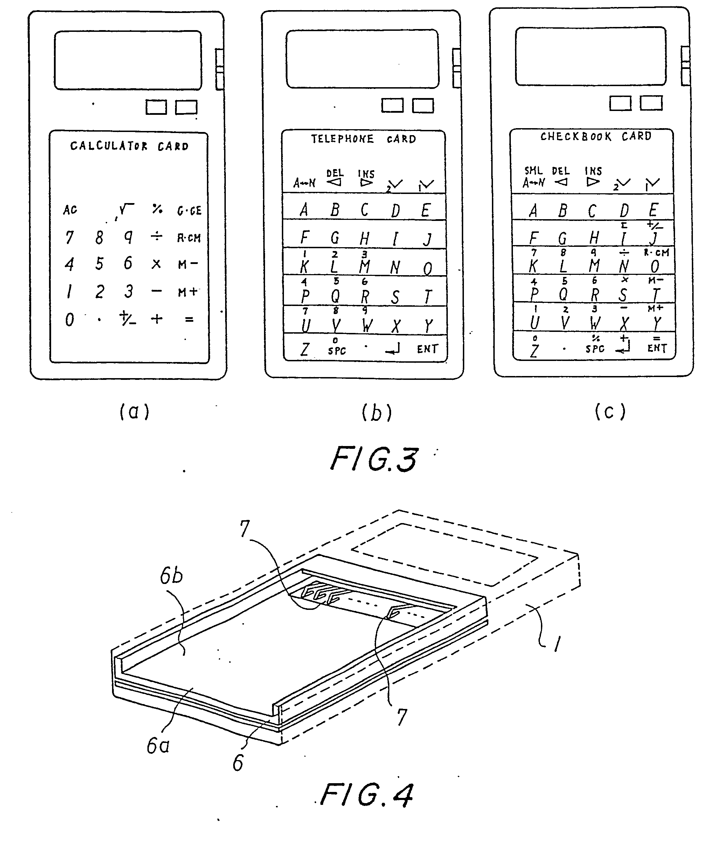

Figs. 2 (a), (b) and (c) show IC cards that can be readily installed in the main unit housing 1 and replaced by one another. The IC card 5 shown in Fig. 2 (a) is a calculation card which executes arithmetical operations. The IC card 5' shown in Fig. 2 (b) is a telephone card that stores and accesses names and telephone numbers. The IC card 5'' shown in Fig. 2 (c) is a checkbook card for writing expenses. When any of these IC cards 5, 5' and 5'' shown in Figs. (a), (b) and (c) is correctly inserted into the main unit housing 1 shown in Fig. 1, an electronic apparatus provided with the input keys shown in Fig. 3 (a), (b) and (c) is completed. The electrical connection between the main unit and the inserted IC card is described below.

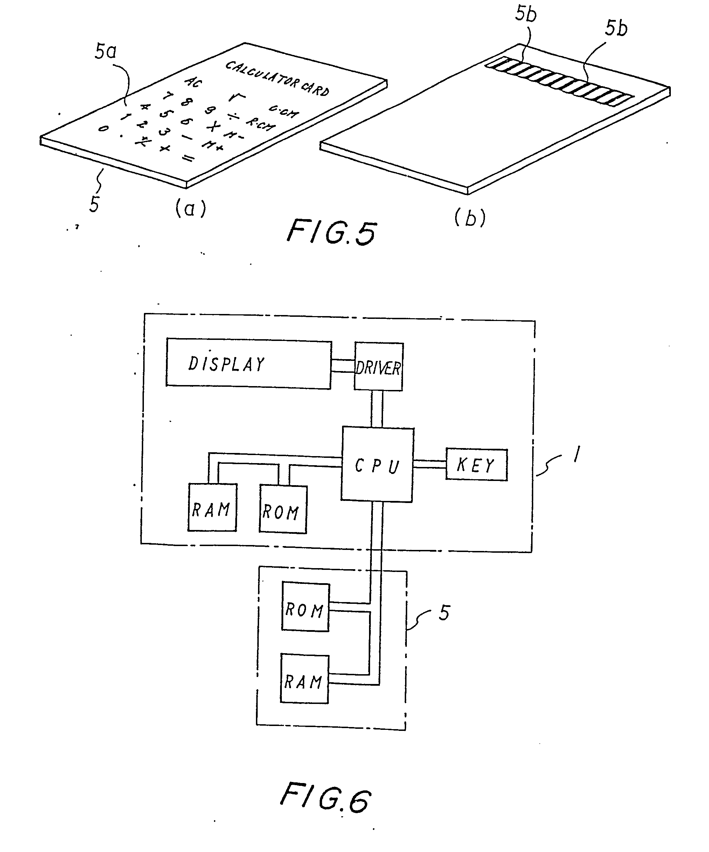

Fig. 4 represents the constitution of the card storage part of the main unit housing 1. A space 6 in the main unit housing 1, shown by the broken line, corresponds to the card storage part; the reference numeral 6a denotes the card-insertion aperture of the card storage part 6. The reference numerals 7, 7, etc denote connector pins which are provided in the innermost position of the card storage part 6 and are electrically connected to the CPU (central processing unit, not shown in Fig. 4) inside the main unit housing 1. Fig. 5 represents the constitution of the IC card which serves as a calculation card 5. As '' shown in Fig. 5 (a), key symbols 5a including numerals 1, 2, 3, etc, "+", "−", "×", "÷", and others made available for forming key formats are provided on the

2

surface of said IC card 5. Pin terminals 5b, 5b, etc are provided on the rear surface of said IC card 5, and are respectively connectable to the connector pins 7, 7, etc inside the card storage part 6.

Consequently, by inserting the IC card 5 into the card storage part 6 so that the rear surface provided with said pin terminals 5b can come into contact with the bottom surface 6b of the card storage part 6, said IC card 5 is eventually fully inserted into the card storage part 5 of the main unit housing 1 and, as a result, connector pins 7, 7, etc inside the card storage part 6 are connected to pin terminals 5b, 5b etc of said IC card 5. Key symbols 5a on the surface of said IC card 5 are then visible through the key electrode surface 4.

Fig. 6 is a schematic block diagram of the electronic apparatus reflecting one of the preferred embodiments of the present invention, which represents the status in which the selected IC card 5 is inserted into the main unit housing 1.

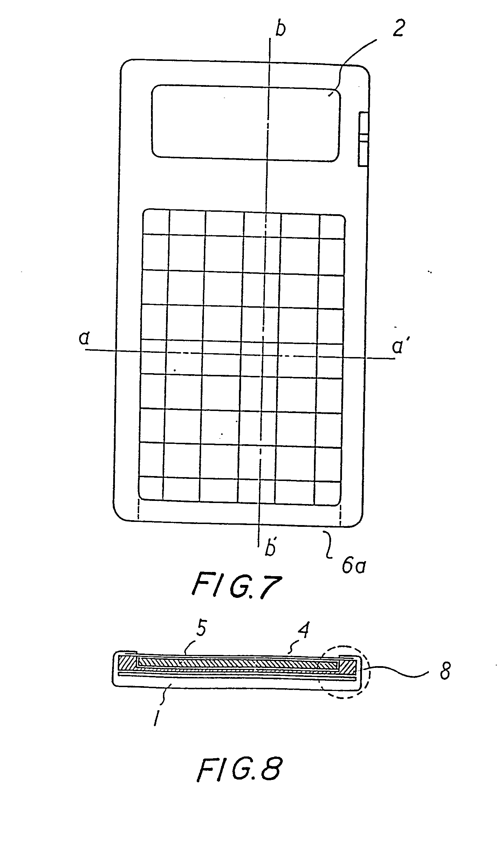

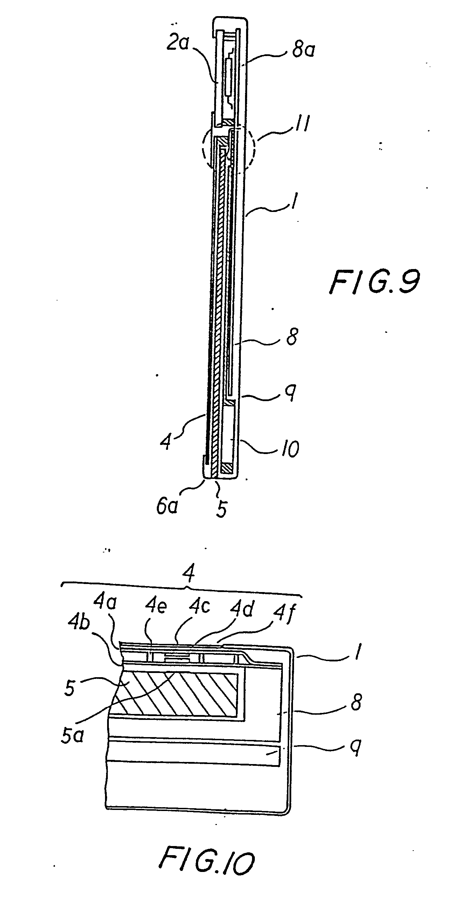

Referring to the figure, the main unit housing 1 contains a central processing unit CPU, a random access memory RAM, a read-only memory ROM, a key electrode KEY, a display unit DISPLAY (corresponding to numeral 2 of Fig. 1), and a drive circuit DRIVER of said display unit. The IC card 5 contains a random access memory RAM storing a variety of data and a read-only memory ROM storing a variety of applied software needed for processing various data. No battery is provided for backing up these RAMs and ROMs. To expressly make clear the constitution of the electronic apparatus embodied by the present invention, two sectional views are provided. The sectional view shown in Fig. 8 is taken on line a - a' with the IC card being fully inserted into the main unit housing 1, whereas the other sectional view shown in Fig. 9 is taken on line b - b', in which the reference numeral 1 denotes the main unit housing and 5 is the IC card cited earlier. The main unit housing 1 contains chassis 9 that secures a printed wiring board 8 mounting liquid crystal cell 2a, LSI 8a and other electronic parts. It facilitates insertion of the selected IC card 5 and a battery 10. When any key on the key electrode surface 4 is pressed, a corresponding signal is delivered to LSI 8a via connector 11 which is comprised of the pin terminal 5b, the connector pin 7 of IC card 5, and a terminal on a printed wiring board 8. This eventually activates the CPU to execute the predetermined data processing operation. The key, electrode surface 4 has the configuration shown in Fig. 10. Explanations of reference numerals identical to those already presented are deleted here. As shown in Fig. 10, the key electrode surface 4 is composed of transparent films 4a and 4b, which are set opposite to each other, transparent electrodes 4c and 4d, which are formed on the transparent films 4a and 4b and which come into contact when the key is pressed, and a transparent spacer 4e that determines the gap between these transparent films 4a and 4b, and a surface layer of transparent plastic sheet 4f. Thus, a large number of electrodes are provided in matrix form. The positions of these transparent electrodes 4c and 4d correspond exactly to those positions where key-symbols 5a are indicated on the IC card 5. This allows key symbol 5 to correctly guide the operator to the place to press after inserting the IC card 5 into the main unit housing 1. Application software internally stored in IC card 5 includes, for example, telephone numbers, addresses, expense memoranda, schedules, time tables, memoranda, and important numbers. Students can also effectively use this apparatus to monitor test results, class attendance, vocabulary, and make calculations. The function of this electronic apparatus can be improved by incorporating a clock function that displays the time when no IC card is inserted.

As is clear from the foregoing detailed description, the electronic apparatus embodied by the present invention features a novel configuration comprising a main unit housing provided with controller unit, an output (display) unit, transparent key electrodes, and IC cards, each of which can be freely inserted into the housing and replaced. Moreover, each card is provided with a memory and key symbols that can be correctly disposed in positions corresponding to the key electrodes when inserted into the main housing, thus allowing the operator to input using those key symbols. As a result, the electronic apparatus embodied by the present invention provides a variety of advantages as described below.

(1) Since the main unit housing comprises a controller unit, an output (display) unit, and key electrodes, none of these need be incorporated on the IC card. This reduces the costs of IC card production.

(2) Personal information can be sufficiently controlled merely by purchasing an electronic apparatus and the necessary number of IC cards, thus offering great convenience and portability.

(3) All required needed key symbols can be formed on each IC card, thus making it possible for the system to correctly dispose of key symbols for easier data processing according to the kind of information processed. This allows the manufacturers to form a neat key layout, thus promoting operational convenience.

(4) Even when dealing with a large quantity of information, all data can be effectively stored in a few IC cards.

**Claims**

1. An electronic apparatus allowing data input operation to be executed by using key symbols, comprising;

a main unit (1) which includes a controller unit (8a) a data output unit (2a), and an array of key elements (4c, 4d); and

card means (5), which can be readily inserted into said main unit (1) and removed therefrom for replacement, said card means having a memory and key symbols (5a) in positions corresponding to the positions of said key elements for indicating the functions of said key elements characterised in that said key elements each comprise transparent key electrode means (4c, 4d) and in the main unit (1) is adapted to accommodate the inserted card means (5) in a position beneath said array of key elements with said key symbols (5a) visible through said transparent key electrode means.

2. An electronic apparatus according to claim 1 wherein said main unit (1) includes a transparent key display surface means (4) including said array of key elements (4c 4d), and beneath which the inserted card means may be accommodated.

3. An electronic apparatus according to claim 2 wherein said card means also includes a card function title which indicates the function of said card means, and which is provided in such a position as to be visible through said transparent key display surface means (4).

4. An electronic apparatus according to claim 2 or claim 3 wherein said transparent key display surface means (4) includes transparent key sheet means (4a, 4b) on which said key electrode means (4c, 4d) are disposed.

5. An electronic apparatus according to claim 4 wherein said transparent key sheet means comprises two transparent spaced apart sheets (4a, 4b) overlying one another, each said key element comprising first and second key electrodes (4c, 4d) disposed on the respective inwardly facing surfaces of said sheets (4a, 4b), spacer means (4e) being provided for normally holding said key electrodes apart.

6. An electronic apparatus according to any preceding claim wherein said main unit has an insertion aperture (6a) for the insertion of said card (5) and a card receiving means (6, 8) having a base surface (6b) for contacting a rear surface of said card (5).

7. An electronic apparatus according to any preceding claim wherein said card is provided with a set of electrical terminals (5b), and wherein said main unit is provided with a corresponding set of connectors (7) to which said terminals (5b) are connected when the card is inserted to complete an electronic circuit which includes said memory of said card means and said controller and data output units of said main unit (1).

8. An electronic apparatus according to any preceding claim wherein said data output unit is a data display unit.

9. An electronic apparatus according to claim 8 wherein said main unit is adapted to provide a time display on said data display unit when the card means is not inserted therein.

10. An electronic apparatus according to any preceding claim wherein said memory in said card means comprises a RAM and a ROM storing applied software for data processing according to the function of the card means.

11. An electronic apparatus according to any preceding claim wherein when the card is received in the main unit said key symbols and key electrodes provide all of the keys necessary for operation of the apparatus to provide the function of the card means, except a power on/off key means which is provided separately on the main unit itself.

12. A main unit for an electronic apparatus allowing data input operation to be executed by using key symbols, said main unit including a controller unit (8a), a data output unit (2a) and an array of key elements (4c, 4d) and having means (6, 8) for receiving a removable card means carrying said key symbols, characterised in that said key elements each comprise transparent key electrode means (4c, 4d) and in that said receiving means (6, 8) is positioned to accommodate the inserted card means in a position beneath said array of key elements with said key symbol (5a) visible through said transparent key electrode means.

13. A main unit according to claim 12 wherein said key electrode means (4c, 4d) are disposed on key sheet means.

**Patentansprüche**

1. Elektronisches Gerät, in das abzuarbeitende Daten mit Hilfe von mit Symbolen versehenen Tasten eingegeben werden können, mit
   einer Haupteinheit (1), die eine Steuerung (8a), eine Datenausgabe (2a) und eine Anordnung von Tastenelementen (4c, 4d) aufweist; und
   einer Karte (5), die in die Haupteinheit (1) eingeschoben und zum Austauschen wieder herausgezogen werden kann, welche Karte einen Speicher und Tastensymbole (5a) an Stellen aufweist, die den Stellen der Tastenelemente entsprechen, um die Funktionen der Tastenelemente anzuzeigen, dadurch gekennzeichnet, daß jedes Tastenelement mit einer durchsichtigen Tastenelektrodenanordnung (4c, 4d) bestückt und die Haupteinheit (1) so ausgebildet ist, daß sie die jeweils eingeschobene Karte (5) positioniert unter der Anordnung der Tastenelemente aufnehmen kann, wobei die Tastensymbole (5a) durch die transparente Tastenelektrodenanordnung hindurch sichtbar sind.

2. Elektronisches Gerät nach Anspruch 1, bei dem die Haupteinheit (1) eine transparente Oberfläche (4) für die die Anordnung der Tastenelemente (4c, 4d) einschließende Tastenanzeige aufweist, unter welcher die Karte einzuschieben ist.

3. Elektronisches Gerät nach Anspruch 2, bei dem die Karte einen Kartenfunktionstitel trägt, der die Funktion der Karte anzeigt und an einer so angebracht ist, daß er durch die transparente Tastenanzeigeoberfläche (4) hindurch sichtbar ist.

4. Elektronisches Gerät nach Anspruch 2 oder Anspruch 3, bei dem die transparente Tastenanzeigeoberfläche (4) eine transparente Tastenfolienanordnung (4a, 4b) aufweist, auf der die Tastenelektrodenanordnung (4c, 4d) aufgebracht ist.

5. Elektronisches Gerät nach Anspruch 4, bei dem die transparente Tastenfolienanordnung zwei voneinander getrennte übereinanderliegende transparente Folien (4a, 4b) aufweist und jedes Tastenelement eine erste und eine zweite Tastenelektrode (4c, 4d) aufweist, die auf den einander zugewandten Flächen der beiden Folien (4a, 4b) aufgebracht sind, mit Abstandshaltern (4e) zum Auseinanderhalten der Tastenelektroden im Normalzustand.

6. Elektronisches Gerät nach einem der vorangehenden Ansprüche, bei dem die Haupteinheit eine Einführöffnung (6a) zum Einführen der Karte (5) und eine Kartenaufnahme (6, 8) mit einer Unterfläche (6b) aufweist, zum Kontaktieren der Rückseite der Karte (5).

7. Elektronisches Gerät nach einem der vorangehenden Ansprüche, bei dem die Karte einen Satz elektrischer Anschlüsse (5b) aufweist und bei dem die Haupteinheit einen entsprechenden Satz von Verbindern (7) aufweist, mit denen die Anschlüsse (5b) verbunden sind, wenn die Karte eingeführt ist, um eine elektronische Schaltung zu vervollständigen, die den Speicher der Karte und die Steuerung und die Datenausgabe der Haupteinheit (1) umfaßt.

8. Elektronisches Gerät nach einem der vorangehenden Ansprüche, bei dem die Datenausgabe eine Datenanzeige ist.

9. Elektronisches Gerät nach Anspruch 8, bei dem die Haupteinheit so ausgebildet ist, daß sie die Zeit auf der Anzeige darstellt, wenn keine Karte eingeführt ist.

10. Elektronisches Gerät nach einem der vorangehenden Ansprüche, bei dem der Speicher in der Karte einen RAM und einen ROM aufweist, der Anwendungs-Software zur Datenverarbeitung entsprechend der Funktion der Karte speichert.

11. Elektronisches Gerät nach einem der vorangehenden Ansprüche, bei dem dann, wenn die Karte von der Haupteinheit aufgenommen ist, die Tastensymbole und die Tastenelektroden alle Tasten bilden, die zum Bedienen des Gerätes erforderlich sind, damit es die Funktion der Karte ausübt, außer einer Taste zum Ein und Ausschalten der Spannungsversorgung, die getrennt an der Haupteinheit selbst angebracht ist.

12. Haupteinheit für ein elektronisches Gerät, das das Eingeben von Daten über Tasten mit Symbolen zuläßt, welche Haupteinheit eine Steuerung (8a), eine Datenausgabe (2a) und eine Anordnung von Tastenelementen (4c, 4d) aufweist und über eine Einrichtung (6, 8) zum Aufnehmen einer entfernbaren Karte verfügt, die die Tastensymbole trägt, dadurch gekennzeichnet, daß jedes Tastenelement eine transparente Tastenelektrodenanordnung (4c, 4d) aufweist und die Aufnahmeeinrichtung (6, 8) so angebracht ist, daß sie die eingeführte Karte in einer Lage unter der Anordnung der Tastenelemente aufnimmt, wobei die Tastensymbole (5a) durch die transparente Tastenelektrodenanordnung hindurch sichtbar sind.

13. Haupteinheit nach Anspruch 12, bei der die Tastenelektrodenanordnung (4c, 4d) auf einer Tastenfolie aufgebracht ist.

## Revendications

1. Appareil électronique permettant d'exécuter l'introduction de données à l'aide de symboles de touches, comprenant:

une unité principale (1) qui comporte une unité de contrôleur (8a), une unité de sortie de données (2a), et un ensemble d'éléments de touches (4c, 4d); et

des moyens formant carte (5) qui peuvent être facilement insérés à l'intérieur de ladite unité principale (1) et retirés de celle-ci en vue de leur remplacement, lesdits moyens formant carte comportant une mémoire et des symboles de touches (5a) en des emplacements correspondant aux emplacements desdits éléments de touches afin d'indiquer les fonctions desdits éléments de touches, caractérisé en ce que lesdits éléments de touches comprennent chacun des moyens formant électrodes de touches transparents (4c, 4d) et en ce que l'unité principale (1) est adaptée en vue de loger les moyens formant carte insérés (5) dans un emplacement situé en dessous dudit ensemble d'éléments de touches, lesdits symboles de touches (5a) étant visibles à travers lesdits moyens formant électrodes de touches transparents.

2. Appareil électronique selon la revendication 1, dans lequel ladite unité principale (1) comprend des moyens formant une surface transparente de visualisation de touches (4) comprenant ledit ensemble d'éléments de touches (4c, 4d), et en dessous desquels les moyens formant carte insérés peuvent être logés.

3. Appareil électronique selon la revendication 2, dans lequel lesdits moyens formant carte comprennent également un titre de fonction de carte qui indique la fonction desdits moyens formant carte et qui est prévu dans un emplacement apte à permettre sa visibilité à travers lesdits moyens formant surface transparente de visualisation de touches (4).

4. Appareil électronique selon la revendication 2 ou la revendication 3 dans lequel lesdits moyens formant surface transparente de visualisation de touches (4) comprennent des moyens formant feuille de touches transparente (4a, 4b) sur lesquels lesdits moyens formant électrodes de touches (4c, 4d) sont disposés.

5. Appareil électronique selon la revendication 4, dans lequel lesdits moyens formant feuille de touches transparente comprennent deux feuilles transparentes espacées l'une de l'autre (4a, 4b) disposées l'une au-dessus de l'autre, chacun desdits éléments de touches comprenant des première et seconde électrodes de touches (4c, 4d) disposées sur les surfaces respectives tournées vers l'intérieur desdites feuilles (4a, 4b), des moyens formant entretoise (4e) étant prévus afin de maintenir lesdites électrodes de touches normalement écartées l'une de l'autre.

6. Appareil électronique selon l'une quelconque des revendications précédentes, dans lequel ladite unité principale comporte une ouverture d'insertion (6a) destinée à l'insertion de ladite carte (5) et des moyens de réception de carte (6, 8) comportant une surface de base (6b) destinée à entrer en contact avec une surface arrière de ladite carte (5).

7. Appareil électronique selon l'une quelconque des revendications précédentes, dans lequel ladite carte est dotée d'un ensemble de bornes électriques (5b), et dans lequel ladite unité principale est dotée d'un jeu correspondant de connecteurs (7) auxquels lesdites bornes (5b) sont reliées lorsque la carte est insérée afin de compléter un circuit électronique qui comprend ladite mémoire desdits moyens formant carte et lesdites unités de contrôleur et de sortie de données de ladite unité principale (1).

8. Appareil électronique selon l'une quelconque des revendications précédentes, dans lequel ladite unité de sortie de données est une unité d'affichage de données.

9. Appareil électronique selon la revendication 8, dans lequel ladite unité principale est adaptée en vue de fournir un affichage de l'heure sur ladite unité d'affichage de données lorsque les moyens formant carte n'y sont pas insérés.

10. Appareil électronique selon l'une quelconque des revendications précédentes, dans lequel ladite mémoire contenue dans lesdits moyens formant carte comprend une mémoire RAM et une mémoire ROM emmagasinant le logiciel d'application destiné au traitement de données selon la fonction des moyens formant carte.

11. Appareil électronique selon l'une quelconque des revendications précédentes, dans lequel, lorsque la carte est logée dans l'unité principale, lesdits symboles de touches et lesdites électrodes de touches fournissent toutes les touches nécessaires au fonctionnement de l'appareil en vue d'assurer la fonction des moyens formant carte, à l'exception de moyens formant touche marche/arrêt qui sont prévus séparément sur l'unité principale elle-même.

12. Unité principale pour un appareil électronique permettant d'exécuter une opération d'introduction de données à l'aide de symboles de touches, ladite unité principale comprenant une unité de contrôleur (8a), une unité de sortie de données (2a) et un ensemble d'éléments de touches (4c, 4d) et comportant des moyens (6, 8) destinés à recevoir des moyens formant carte amovibles portant lesdits symboles de touches, caractérisée en ce que lesdits éléments de touches comprennent chacun des moyens formant électrodes de touches transparents (4c, 4d) et en ce que lesdits moyens de réception (6, 8) sont positionnés en vue de loger les moyens formant carte insérés dans un emplacement situé en dessous dudit ensemble d'éléments de touches, lesdits symboles de touches (5a) étant visibles à travers lesdits moyens formant électrodes de touches transparents.

13. Unité principale selon la revendication 12, dans laquelle lesdits moyens formant électrodes de touches (4c, 4d) sont disposés sur des moyens formant feuille de touches.

FIG. 1

| CALCULATOR CARD | | | | |
|---|---|---|---|---|
| AC | | √ | % | C·CE |
| 7 | 8 | 9 | ÷ | R·CM |
| 4 | 5 | 6 | × | M− |
| 1 | 2 | 3 | − | M+ |
| 0 | · | +/− | + | = |

(a)

| TELEPHONE CARD | | | | |
|---|---|---|---|---|
| A→N | DEL ◁ | INS ▷ | ₂∨ | ¹∨ |
| A | B | C | D | E |
| F | G | H | I | J |
| K | L | M | N | O |
| P | Q | R | S | T |
| U | V | W | X | Y |
| Z | SPC | · | ↵ | ENT |

(b)

| CHECKBOOK CARD | | | | |
|---|---|---|---|---|
| SHL A→N | DEL ◁ | INS ▷ | ₂∨ | ¹∨ |
| A | B | C | D | E |
| F | G | H | I | J |
| K | L | M | N | O |
| P | Q | R | S | T |
| U | V | W | X | Y |
| Z | · | SPC | ↵ | ENT |

(c)

FIG. 2

(a)       (b)       (c)

FIG.3

FIG.4

FIG.5

FIG.6

FIG.7

FIG.8

FIG.9

FIG.10